# EUROPÄISCHE PATENTSCHRIFT

(11) **EP 2 266 412 B1**
(45) Veröffentlichungstag und Bekanntmachung des Hinweises auf die Patenterteilung: **08.01.2014**
(21) Anmeldenummer: 10006641.4
(22) Anmeldetag: 25.06.2010
(51) Int. Cl.: A23C 9/12, A23C 9/123

(54) **Verfahren und Vorrichtung zum Bearbeiten von fermentierten Milchprodukten**
Method and device for processing fermented milk products
Procédé et dispositif de traitement de produits laitiers fermentés

(30) Priorität: 25.06.2009 DE 102009030459
(43) Veröffentlichungstag der Anmeldung: 29.12.2010
(60) Teilanmeldung: 13002190.0
(73) Patentinhaber: Molkerei Alois Müller GmbH & Co. KG, 86850 Aretsried (DE)
(72) Erfinder: Krämer, Sebastian, 85354 Freising (DE); Pires, Ricardo, 80939 München (DE); Winterwerber, Harald, 84089 Aiglsbach (DE); Böhme, Reinhard, 93356 Teugn (DE)
(74) Vertreter: Leinweber & Zimmermann

(56) Entgegenhaltungen:
- EP-A1- 1 815 747
- WO-A1-2007/095969
- CH-A- 238 115
- DE-A1- 2 752 751
- FR-A- 958 314
- US-A- 1 753 693
- US-A- 3 946 657

## Beschreibung

Die Erfindung betrifft ein Verfahren zum Verarbeiten von fermentierten Milchprodukten, bei dem das Milchprodukt eine von einer Mehrzahl von Öffnungen durchsetzte Verarbeitungseinrichtung von einer Retentatseite in Richtung auf eine Permeatseite durchdringt.

Beim Fermentieren von Milch werden während der Fermentation durch die dabei gebildete Säure die löslichen Proteine der Milch destabilisiert. Dabei wird ein Gel ausgebildet. Zum Erhalt von Endprodukten mit einem gewünschten Aussehen, einer definierten Textur und Stabilität ist es erforderlich, dieses Gel in kleine Gelpartikel zu zerkleinern, um so eine Suspension bzw. kolloidale Dispersion zu erhalten, welche die bspw. für ein Rührjoghurt erforderlichen Produkteigenschaften hat.

Die mechanische Zerkleinerung der Gelpartikel wird üblicherweise durch gezieltes Rühren, Pumpen durch Spaltöffnungen oder Gewebesiebe oder mit Hilfe von Zahnkranzdispergiermaschinen durchgeführt. Ziel der entsprechenden Verarbeitung fermentierter Milchprodukte ist es dabei, ein Endprodukt mit gewünschten optischen und sensorischen Eigenschaften, wie etwa ein besonders glattes Endprodukt, zu erhalten. Dabei hat die durch die Zerkleinerung des Gels entstehende Teilchengrößenverteilung der Gelpartikel einen großen Einfluß auf die Textur, insbes. auf die Konsistenz und Suspensionsstabilität der Endprodukte.

Die Optimierung der erwünschten Produkteigenschaften, wie etwa der Erhalt eines besonders glatten Endprodukts und die maximale Texturausbeute, d. h. die optimale Ausnutzung der fermentierten Milchprodukte, hängt in großem Maß von den zur Zerkleinerung der Gelpartikel eingesetzten Vorrichtungen und Verfahren ab. Im Hinblick auf die gewünschten Produkteigenschaften ist es besonders vorteilhaft, die durch die Verarbeitung erhaltene Partikelgrößenverteilung möglichst eng einzustellen und die mittlere Partikelgröße möglichst groß zu wählen. Dabei wird die mittlere Partikelgröße allerdings üblicherweise im Hinblick auf einen vernünftigen Kompromiß zwischen gewünschten Produkteigenschaften (glattes Produkt) und Texturausbeute eingestellt.

Die Druckschrift DE 27 52 751 beschreibt ein Verfahren zum Verarbeiten eines fermentierten Milchprodukts, bei dem das Milchprodukt durch Löcher einer schnell bewegten Rührplatte tritt.

Die Verwendung der herkömmlichen Verfahren und Vorrichtungen zur Zerkleinerung der Gelpartikel führt oft zu unbefriedigenden Produkteigenschaften oder zu einem Mehraufwand an Milchproteinen oder Bindemitteln. Beispielsweise werden oft Endprodukte erhalten, die vereinzelt optisch sichtbare Gelpartikel halten. In anderen Fällen, wie etwa bei der Verwendung von Gewebesieben, werden ungleichmäßige Produkteigenschaften aufgrund von Verstopfungen bzw. Deckschichtbildungen beobachtet.

Angesichts der vorstehend beschriebenen Probleme im Stand der Technik liegt der Erfindung die Aufgabe zugrunde, Verfahren zum Verarbeiten fermentierter Milchprodukte bereitzustellen, mit denen gewünschte Produkteigenschaften ohne übermäßigen Aufwand erreicht werden können und zur Ausführung entsprechender Verfahren geeignete Vorrichtungen anzugeben.

Erfindungsgemäß wird diese Aufgabe durch eine Weiterbildung der bekannten Verfahren gelöst, die im wesentlichen dadurch gekennzeichnet ist, daß das Milchprodukt mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird.

Bei dem erfindungsgemäßen Verfahren passieren kleine Partikel des zu verarbeitenden fermentierten Milchprodukts die Öffnungen in der Verarbeitungseinrichtung ungehindert, während große Partikel durch die Einstreifeinrichtung schonend durch die Öffnungen der Verarbeitungseinrichtung gedrückt werden. Gleichzeitig werden die Öffnungen durch die Bewegung der Einstreifeinrichtung längs der Retentatseite kontinuierlich frei gehalten. Dabei erfolgt die Bewegung der Einstreifeinrichtung vorzugsweise in schleifender Anlage an der Retentatseite der Verarbeitungseinrichtung, um so eine besonders wirkungsvolle Reinigung der Öffnungen der Verarbeitungseinrichtung zu erhalten.

Die Erfindung geht dabei auf die Erkenntnis zurück, daß die im Stand der Technik beobachteten Probleme auf zu große bzw. ungleichmäßige Spalten- oder Porenweiten oder auf eine zu hohe mechanische Beanspruchung der Gelpartikel zurückzuführen sind. Überraschenderweise wurde herausgefunden, daß durch die erfindungsgemäße Verwendung einer längs der Retentatseite der Verarbeitungseinrichtung bewegbaren Einstreifeinrichtung sehr viel kleinere Porengrößen im Vergleich zur Verwendung von Gewebesieben notwendig werden, um die erwünschte Produkteigenschaft und ein glattes Aussehen zu erreichen, so daß diese gewünschten Eigenschaften unter gleichzeitiger Sicherstellung einer zufriedenstellenden Texturausbeute erhalten werden können.

Die erfindungsgemäße Kombination von für das fermentierte Milchprodukt durchlässige Öffnungen aufweisenden Verarbeitungseinrichtungen mit der mechanischen Einstreifeinrichtung macht davon Gebrauch, daß die bei Filtern üblicherweise entstehende Filterdeckschicht bzw. Ablagerungsschicht bzw. der Filterkuchen mit entsprechender Porosität und sich daraus ergebendem Ablagerungswiderstand, abgetragen bzw. abgestreift wird, so daß es zu keinem Filterkuchenaufbau kommt und somit nur die Geometrie der Öffnungen in der Verarbeitungseinrichtung die Partikelgröße und -verteilung beeinflußt.

Im Verlauf einer erfindungsgemäßen Verarbeitung von fermentierten Milchprodukten wird die während der Fermentation erhaltene Gelsuspension durch die Verarbeitungseinrichtung gedrängt. Dabei sammeln sich die größeren Partikel an den Öffnungen und werden aufgrund ihrer nur geringen Festigkeit mit Hilfe der Einstreifeinrichtung durch die Öffnungen geschoben und somit gezielt zerkleinert. Im Gegensatz zu den bekannten Verfahren kann die maximale Partikelgröße durch das erfindungsgemäße Verfahren definiert beeinflußt werden und es stellen sich die folgenden Vorteile ein: Da der Bildung des Filterkuchens entgegengewirkt wird, kann die Partikelzerkleinerung kontinuierlich bei gleichbleibender Qualität über mehrere Stunden ohne Notwendigkeit eines Wechselns oder der Reinigung der Verarbeitungseinrichtung betrieben werden, weil es durch Einsatz der Einstreifeinrichtung nicht zur Bildung einer Ablagerungsschicht kommt, wie sie bei herkömmlichen Verfahren entsteht. Die maximale Partikelgröße kann insbes. durch die Wahl der Größe der Öffnungen in der Verarbeitungseinrichtung gezielter eingestellt werden und über mehrere Stunden bei kontinuierlichem Betrieb eingehalten werden. Dadurch kann die mittlere Partikelgröße unter Berücksichtigung der sensorischen Grenzen maximiert werden, um so auch bei der mit erfindungsgemäßen Verfahren möglichen Herstellung von Mikrogelsuspensionen die Texturausbeute zu verbessern.

Der Energieeintrag, die Schubspannung und somit die mechanische Belastung der recht labilen Gelpartikel wird durch Einsatz erfindungsgemäßer Einstreifeinrichtungen reduziert, so daß mehr Serum in den einzelnen Partikeln gebunden werden kann und jedes einzelne Gelpartikel somit sein maximales Volumen, ausgehend von der Gelbildung während der Fermentation, beibehält, Die Breite der Partikelgrößenverteilung kann reduziert werden, was zu einer homogeneren Suspension führt. Dies hat auch zur Folge, daß die maximale Packungsdichte der Suspension reduziert wird, was dann zu einer höheren Viskosität führt. Auch das trägt zur Verbesserung der Texturausbeute bei.

Bei Einsatz erfindungsgemäßer Verfahren können die bei herkömmlichen Verfahren auftretenden, optisch sichtbaren und u. U. sensorisch wahrnehmbaren größeren Partikel sicher ausgeschlossen werden. Die Stabilität der Suspension bzw. des Endprodukts wird, je nach Ausgangsmaterial, positiv beeinflußt. Es findet im Vergleich zu herkömmlichen Verfahren wegen der unter Einsatz erfindungsgemäßer Verfahren erhöhten Homogenität der Suspension und Begrenzung der maximalen Partikelgröße keine wahrnehmbare Sedimentation von größeren Partikeln im Endprodukt statt.

Im Hinblick auf die zuverlässige Ablösung von sich auf der Retentatseite der Verarbeitungseinrichtung anlagernden Partikel unter gleichzeitiger Vermeidung einer übermäßigen mechanischen Belastung dieser Partikel hat es sich als günstig erwiesen, wenn die Einstreifeinrichtung unter Bildung eines sich in einer der Bewegungsrichtung der Einstreifeinrichtung entgegengesetzten Richtung verjüngenden Keilspalts zwischen einer der Verarbeitungseinrichtung zugewandten Begrenzungsfläche der Einstreifeinrichtung und der retentatseitigen Begrenzungsfläche der Verarbeitungseinrichtung längs der retentatseitigen Begrenzungsfläche bewegt wird. Bei dieser Bewegungsführung gelangen die durch die Verarbeitungseinrichtung zu drängenden Partikel von einem Bereich mit einer großen Spaltbreite zwischen Einstreifeinrichtung und Verarbeitungseinrichtung im Verlauf der Bewegung der Einstreifeinrichtung in einen Bereich mit geringerer Spaltbreite, so daß bei Erreichen eines Spalts, bei dem eine genügend große Kraft auf die Partikel zur Verfügung gestellt wird, um diese durch die Öffnungen in der Verarbeitungseinrichtung zu drängen, ein Durchdringen der Öffnungen in der Verarbeitungseinrichtung erfolgt, ohne daß dazu mehr Kraft aufwendet wird, als zwingend erforderlich ist.

Im Hinblick auf eine zuverlässige Vermeidung der Bildung eines Filterkuchens auf der Verarbeitungseinrichtung unter gleichzeitiger Sicherstellung einer schonenden Behandlung des zu verarbeitenden fermentierten Milchprodukts hat es sich als günstig erwiesen, wenn die retentatseitige Begrenzungsfläche der Verarbeitungseinrichtung mit einer Frequenz von 0,05 bis 2 Hz, insbes. 0,1 bis 1 Hz, von der Einstreifeinrichtung überstrichen wird. Dabei können zwei oder mehr jeweils mit einer geringeren Frequenz über die retentatseitige Begrenzungsfläche der Verarbeitungseinrichtung streifende Einstreifelemente der Einstreifeinrichtung zum Einsatz kommen.

Zum Erhalt eines homogenen Endprodukts hat es sich als günstig erwiesen, wenn die Verarbeitungseinrichtung einen von einer Mehrzahl von Öffnungen vorgegebener Größe und Geometrie durchsetzten, vorzugsweise starren, Körper aufweist. Die Verwendung eines starren Körpers als von den Öffnungen durchsetzte Verarbeitungseinrichtung hat den Vorteil, daß durch die streifende Anlage der Einstreifeinrichtung an der Verarbeitungseinrichtung definierte Kraftverhältnisse bereitgestellt werden können, welche die Beaufschlagung der Gelpartikel mit einer übermäßigen Kraft zu vermeiden helfen. Im Rahmen der Erfindung können bspw. einfache Lochbleche als Verarbeitungseinrichtung eingesetzt werden. Im Hinblick auf den Erhalt homogener Produkteigenschaften hat es sich als zweckmäßig erwiesen, wenn die Öffnungen der Verarbeitungseinrichtung im wesentlichen kreisförmig mit einheitlichem Durchmesser ausgeführt sind, wobei der Öffnungsdurchmesser 15 bis 400. µm, insbes. 30 bis 200 µm betragen kann.

Wie der vorstehenden Erläuterung erfindungsgemäßer Verfahren zu entnehmen ist, zeichnet sich eine Vorrichtung zum Ausführen derartiger Verfahren mit einer für fermentierte Milchprodukte von einer Retentatseite in Richtung auf eine Permeatseite durchlässigen Verarbeitungseinrichtung im wesentlichen dadurch aus, daß sie eine längs der Retentatseite bewegbare und dadurch das Milchprodukt in Richtung auf die Permeatseite drängende Einstreifeinrichtung aufweist. Dabei kann die Einstreifeinrichtung ein Einstreifelement umfassen, das bei einer Bewegung längs der Retentatseite einen sich in einer der Bewegungsrichtung entgegengesetzten Richtung verjüngenden Spalt zwischen einer retentatseitigen Begrenzungsfläche der Verarbeitungseinrichtung und dem Einstreifelement bildet.

Dabei kann die Verarbeitungseinrichtung einen von Öffnungen vorgegebener Größe und Geometrie durchsetzten starren Körper, wie etwa ein Lochblech, aufweisen, wobei die Öffnungen im wesentlichen kreisförmig mit einheitlichem Durchmesser ausgeführt sein können und der Öffnungsdurchmesser vorzugsweise 15 bis 400 µm, insbes. 30 bis 200 µm, beträgt.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- **Fig. 1**: eine schematische Darstellung einer ersten Ausführungsform der Erfindung und
- **Fig. 2**: eine schematische Darstellung einer zweiten Ausführungsform der Erfindung.

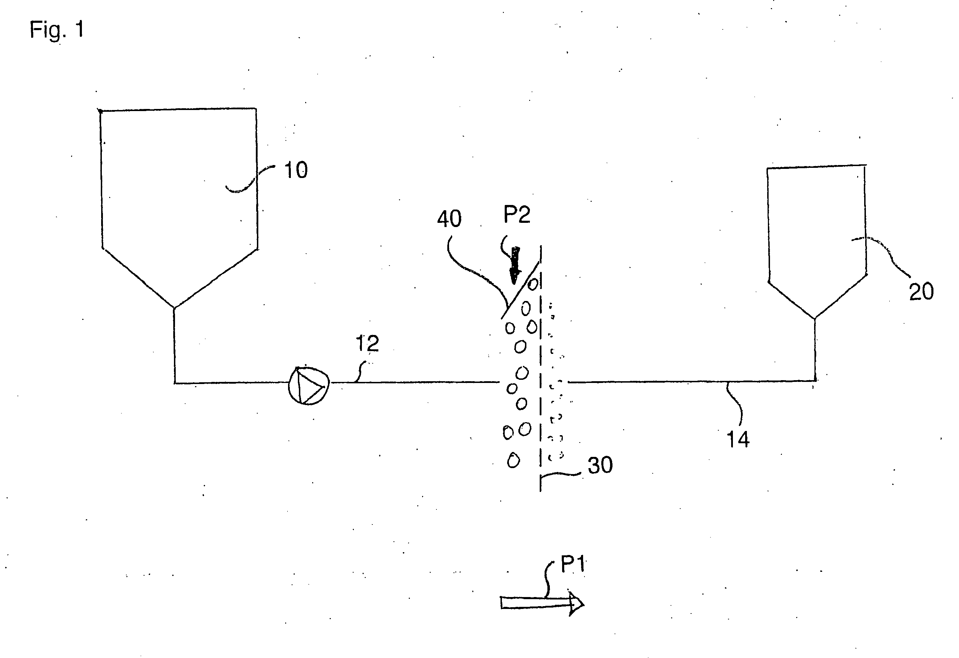

Bei der in Fig. 1 dargestellten Ausführungsform der Erfindung wird ein fermentiertes Milchprodukt aus einem Vorratsbehälter 10 über eine Leitung 12 in der durch den Pfeil P1 bezeichneten Strömungsrichtung in Richtung auf eine Verarbeitungseinrichtung in Form eines mit Poren versehenen Lochblechs 30 gepumpt. Nach Passieren des Lochblechs 30 gelangt das fermentierte Milchprodukt über die Leitung 14 in einen Sammelbehälter 20. Bei der in Fig. 1 dargestellten Ausführungsform der Erfindung wird das fermentierte Milchprodukt mit Hilfe eines in der durch den Pfeil P2 in schleifender Anlage an dem Lochblech 30 bewegbaren Einstreifblechs 40 durch das Lochblech 30 gedrängt. Dazu ist das Einstreifblech 40 so ausgeführt, daß ein sich in einer der Bewegungsrichtung P2 des Einstreifblechs 40 entgegengesetzten Richtung verjüngender Keilspalt zwischen dem Lochblech 30 und dem Einstreifblech 40 gebildet ist. Dadurch wird eine schonende Verarbeitung der fermentierten Milchprodukte begünstigt, wie vorstehend bereits erläutert.

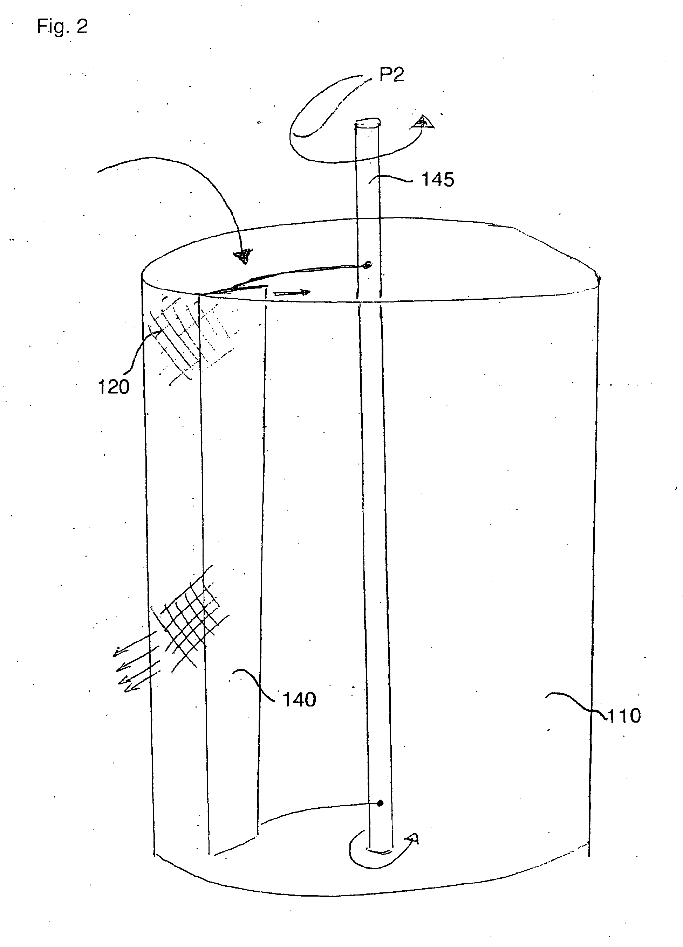

Bei der in Fig. 2 dargestellten Ausführungsform der Erfindung ist das fermentierte Milchprodukt in einem Vorratsbehälter 110 aufgenommen, dessen Mantelfläche durch einen Siebkorb 120 gebildet ist. Zum Verarbeiten des fermentierten Milchprodukts wird dieses mit Hilfe eines in schleifender Anlage längs der inneren Begrenzungsfläche des Siebkorbs 120 bewegten Einstreifblechs 140 durch den Siebkorb gedrängt. Dabei umläuft das Einstreifblech 140 eine Wellenachse 145 in der durch den Pfeil P2 bezeichneten Richtung, derart, daß ein sich in der der Bewegungsrichtung des Einstreifblechs 140 entgegengesetzten Richtung verjüngender Keilspalt zwischen dem Einstreifblech 140 und dem Siebkorb 120 gebildet ist. Das Milchprodukt gelangt nach Passieren des Siebkorbs 120 ebenfalls in einen Vorratsbehälter, der in Fig. 2 nicht dargestellt ist.

Die Erfindung ist nicht auf die anhand der Zeichnung dargestellten Ausführungsformen beschränkt. Vielmehr ist auch an den Einsatz von Einstreifeinrichtungen mit zwei, drei oder mehr Einstreifblechen gedacht, die jeweils umlaufend an einer Einstreifwelle befestigt sein können.

## Patentansprüche

1. Verfahren zum Verarbeiten von fermentierten Milchprodukten, bei dem das Milchprodukt eine von einer Mehrzahl von Öffnungen durchsetzte Verarbeitungseinrichtung von einer Retentatseite in Richtung auf eine Permeatseite durchdringt, **dadurch gekennzeichnet, daß** das Milchprodukt mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird.

2. Verfahren nach Anspruch 1, **dadurch gekennzeichnet, daß** die Einstreifeinrichtung unter Bildung eines sich in einer der Bewegungsrichtung entgegengesetzten Richtung verjüngenden Keilspalts zwischen einer der Verarbeitungseinrichtung zugewandten Begrenzungsfläche der Einstreifeinrichtung und der retentatseitigen Begrenzungsfläche der Verarbeitungseinrichtung längs der retentatseitigen Begrenzungsfläche bewegt wird.

3. Verfahren nach Anspruch 1 oder 2, **dadurch gekennzeichnet, daß** die retentatseitige Begrenzungsfläche der Verarbeitungseinrichtung mit einer Frequenz von 0,05 bis 2 Hz, insbes. 0,1 bis 1 Hz, von der Einstreifeinrichtung überstrichen wird.

4. Verfahren nach einem der vorhergehenden Ansprüche, **dadurch gekennzeichnet, daß** die Verarbeitungseinrichtung einen von einer Mehrzahl von Öffnungen vorgegebener Größe und Geometrie durchsetzten, vorzugsweise starren, Körper aufweist.

5. Verfahren nach Anspruch 4, **dadurch gekennzeichnet, daß** die Öffnungen im wesentlichen kreisförmig mit einheitlichem Durchmesser ausgeführt sind.

6. Verfahren nach Anspruch 5, **dadurch gekennzeichnet, daß** der Öffnungsdurchmesser 15 bis 400 µm, insbes. 30 bis 200 µm, beträgt.

## Claims

1. A method for processing fermented milk products, in which the milk product passes through processing equipment made with a plurality of openings from a retentate side towards a permeate side, **characterised in that** the milk product is forced through the processing equipment by an insert device moved preferably in sliding contact along a retentate-side boundary surface of the processing equipment.

2. The method according to Claim 1, **characterised in that** the insert device, in forming a wedge-shaped gap which tapers in a direction opposite to the direction of movement, is moved between a boundary surface of the insert device facing the processing equipment and the retentate-side boundary surface of the processing equipment along the retentate-side boundary surface.

3. The method according to Claim 1 or 2, **characterised in that** the retentate-side boundary surface of the processing device is passed over by the insert device at a frequency of 0.05 to 2 Hz, in particular 0.1 to 1 Hz.

4. The method according to any of the preceding claims, **characterised in that** the processing equipment has a body, preferably rigid, made with a plurality of openings of predetermined size and geometry.

5. The method according to Claim 4, **characterised in that** the openings are executed in a substantially circular shape with uniform diameter.

6. The method according to Claim 5, **characterised in that** the opening diameter is 15 to 400 µm, in particular 30 to 200 µm.

## Revendications

1. Procédé de traitement de produits laitiers fermentés, dans lequel le produit laitier passe par un dispositif de traitement perforé d'une pluralité d'ouvertures, d'un côté rétentat en direction d'un côté perméat, **caractérisé en ce que** le produit laitier est forcé à travers le dispositif de traitement par un dispositif de transfert mobile en opérant de préférence un certain frottement le long d'une surface limite du dispositif de traitement située côté rétentat.

2. Procédé selon la revendication 1, **caractérisé en ce que** le dispositif de transfert subit un déplacement, en formant un interstice cunéiforme qui va en s'amincissant dans une direction opposée à la direction de déplacement, entre une surface limite du dispositif de transfert tournée vers le dispositif de traitement et la surface limite située côté rétentat du dispositif de traitement, le long de la surface limite située côté rétentat.

3. Procédé selon la revendication 1 ou 2, **caractérisé en ce que** la surface limite du dispositif de traitement située côté rétentat subit un balayage de la part du dispositif de transfert à une fréquence allant de 0,05 à 2 Hz, notamment de 0,1 à 1 Hz.

4. Procédé selon l'une des revendications précédentes, **caractérisé en ce que** le dispositif de traitement présente un corps, de préférence rigide, perforé d'une pluralité d'ouvertures d'une grosseur et d'une géométrie prédéfinies.

5. Procédé selon la revendication 4, **caractérisé en ce que** les ouvertures sont essentiellement circulaires et de diamètre uniforme.

6. Procédé selon la revendication 5, **caractérisé en ce que** le diamètre des ouvertures va de 15 à 400 µm, notamment de 30 à 200 µm.
